# EUROPEAN PATENT SPECIFICATION

(11) **EP 3 719 275 B1**
(45) Date of publication and mention of the grant of the patent: **27.10.2021**
(21) Application number: 19167531.3
(22) Date of filing: 05.04.2019
(51) Int. Cl.: F02C 6/12, F02C 9/18, B01F 3/02, B01F 5/04

(54) **IMPROVEMENTS IN TWIN TURBOCHARGER SYSTEMS**
VERBESSERUNGEN AN DOPPELTURBOLADERSYSTEMEN
AMÉLIORATIONS DANS DES SYSTÈMES DE TURBOCOMPRESSEUR DOUBLES

(43) Date of publication of application: 07.10.2020
(73) Proprietor: Perkins Engines Company Ltd, Peterborough PE1 5FQ (GB)
(72) Inventor: LUSARDI, Christopher, Peoria, Illinois 61614 (US); KRUISWYK, Richard, Dunlap, Illinois 61525 (US)
(74) Representative: Murgitroyd & Company

(56) References cited:
- EP-A1- 2 011 967
- EP-A2- 2 463 483
- DE-A1- 10 019 774
- DE-A1- 19 833 619
- DE-A1-102007 046 667
- US-A1- 2014 069 541

## Description

### Field of invention

This invention relates to turbochargers. A high pressure turbocharger is disclosed as well as ducting for connecting a high pressure turbocharger with a low pressure turbocharger. A turbocharger system is also disclosed.

### Background of Invention

In known twin turbocharger engines, a high pressure turbocharger is fluidly connected with a low pressure turbocharger via a main duct. Exhaust gases are introduced into the high pressure turbocharger to drive a compressor. The exhaust gases pass through the high pressure turbocharger to a high pressure turbocharger outlet which is fluidly connected with the main duct. The exhaust gases then pass through the main duct to an inlet of the low pressure turbocharger. The exhaust gases then flow through the low pressure turbocharger and drive the compressor of the low pressure turbocharger.

It is known to introduce exhaust gases from a wastegate into the main duct between the high and low pressure turbochargers. This is disclosed in US 9 062 594 B2.

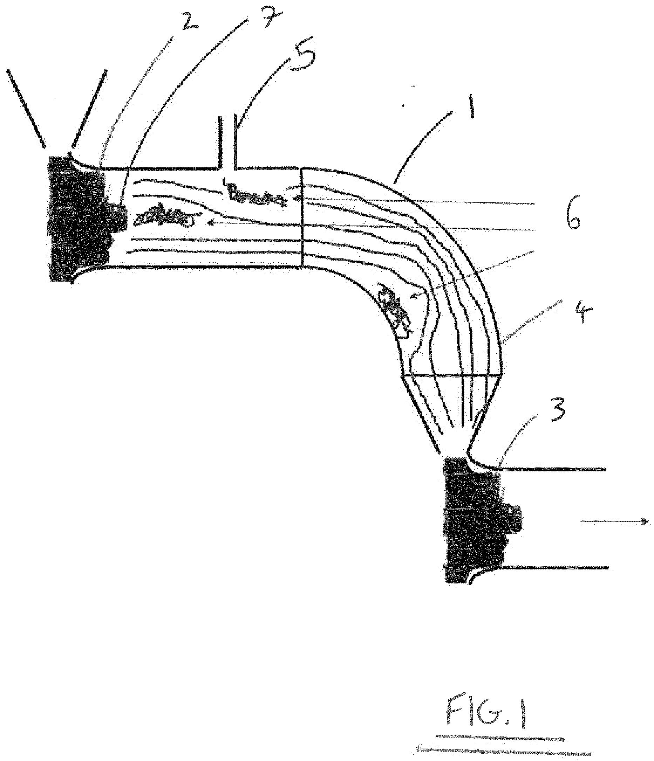

A prior turbocharger arrangement which comprises a main duct 1 that fluidly connects high and low pressure turbochargers 2, 3 is shown in Figure 1. The main duct 1 includes a curved portion 4. As shown, flow from a wastegate is introduced between the high and low pressure turbochargers via an ancillary duct 5. As shown, a high loss region 6 in the flow is present just downstream of a rotor hub 7 of the high pressure turbocharger 2 and a further high loss region 6 in the flow is present on the inside of the curved portion 4. At the high loss regions 6 the flow is far more turbulent than at surrounding flow regions. These fluid dynamic losses result in higher exhaust manifold pressure which reduces engine efficiency.

It will be noted that in the prior turbocharger arrangement, the ancillary duct outlet is simply a hole in the main duct 1. The axis of the ancillary duct outlet is perpendicular to the sidewall of the main duct 1. Further the ancillary duct outlet is not pointed towards the outlet of the main duct 1.

Further ductings are known from DE102007046667 A1, US2014069541 A1 and DE19833619 A1.

It is the object of the present invention to mitigate or obviate at least one problem with prior twin turbocharger arrangements.

### Summary of Invention

According to a first aspect of the present invention, there is provided ducting for use with:
a high pressure turbocharger (HPT) having:
   a HPT exhaust gas outlet,
   a rotor with a rotor axis, and
   a wastegate adapted to selectively bypass the HPT; and
a low pressure turbocharger (LPT) having an LPT exhaust gas inlet, wherein the ducting comprises:
a first duct having a first duct inlet connectable to the HPT exhaust gas outlet and a first duct outlet connectable to the LPT exhaust gas inlet; and
a second duct having a second duct inlet for wastegate gases from the wastegate of the HPT and a second duct outlet located within the first duct, wherein the second duct comprises an elongate second duct portion which is a length of the second duct located within the first duct, the second duct portion comprising the second duct outlet and being arranged such that the second duct outlet is pointed towards the first duct outlet, wherein the first duct has a length (L) extending from the first duct inlet to the first duct outlet, wherein the second duct is arranged such that the second duct outlet is positioned along the length (L) a distance in the range of 0.01L to 0.3L away from the first duct outlet.

According to a second aspect of the present invention, there is provided a turbocharger system comprising:
a high pressure turbocharger (HPT) having:
   a HPT exhaust gas inlet and a HPT exhaust gas outlet,
   a rotor with a rotor axis, and
   a wastegate adapted to selectively bypass the HPT;
a low pressure turbocharger (LPT) having a LPT exhaust gas inlet and a LPT exhaust gas outlet; and
   ducting according to the first aspect,
   wherein the first duct inlet of the ducting is connected with the HPT exhaust gas outlet and the first duct outlet of the ducting is connected with the LPT exhaust gas inlet,
wherein the second duct inlet of the ducting is fluidly connected with the wastegate.

According to a third aspect of the present invention, there is provided a vehicle including:
an internal combustion engine; and
the turbocharger system of the second aspect.

### Brief Description of the Drawings

Preferred embodiments of the present invention will now be described, by way of example only, with reference to the accompanying drawings, in which:
Figure 1 shows a turbocharger system of the prior art;
Figure 2 is a schematic diagram depicting ducting according to a first embodiment not forminig part of the present invention fluidly connecting a high pressure turbocharger with a low pressure turbocharger;
Figure 3 is a schematic diagram depicting ducting according to a second embodiment not forming part of the present invention fluidly connecting a high pressure turbocharger with a low pressure turbocharger;
Figure 4 shows ducting according to a third embodiment of the present invention;
Figure 5 shows a schematic diagram of ducting according to a fourth embodiment of the present invention;
Figure 6 shows ducting according to a fifth embodiment of the present invention; and
Figure 7 shows a schematic diagram depicting a turbocharger system incorporating ducting according to the present invention.

### Detailed Description of the Drawings

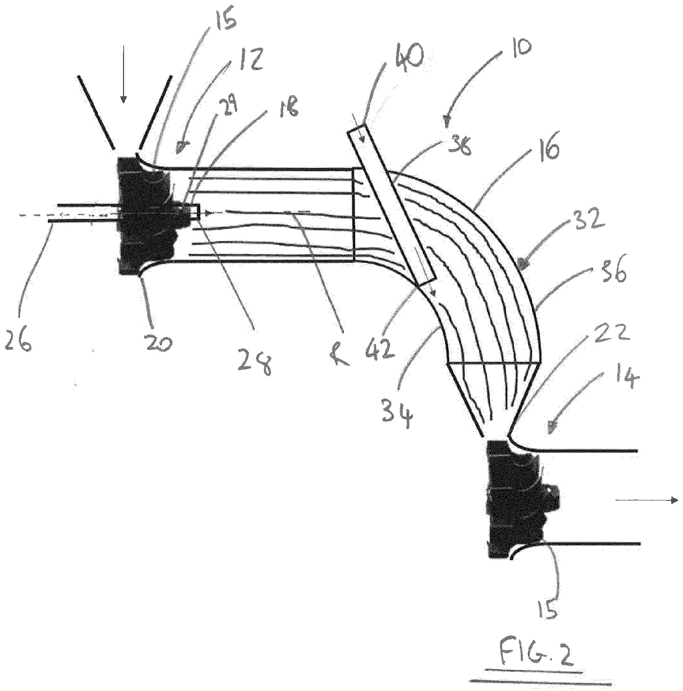

With reference to Figure 2, there is shown ducting 10 according to a first embodiment not forming part of the present invention. The ducting 10 is for use with high and low pressure turbochargers 12, 14. Each of the high pressure turbocharger (HPT) and low pressure turbocharger (LPT) 12, 14 includes a rotor 15 which is rotatably supported on a rotor hub. It will be appreciated that Figures 1 and 2 are schematics and each of the turbochargers 12, 14 comprises a housing. The housing of the high pressure turbocharger HPT 12 comprises a HPT exhaust gas inlet and a HPT exhaust gas outlet. The housing of the LPT 14 comprises a LPT exhaust gas inlet and a LPT exhaust gas outlet.

The ducting 10 includes first and second ducts 16, 18. The first duct 16 comprises a first duct inlet 20 and a first duct outlet 22. The first duct 16 has a length (L) which extends from the first duct inlet 20 to the first duct outlet 22. The first duct 12 is for fluidly connecting the HPT exhaust gas outlet with the LPT exhaust gas inlet. In other words, the first duct inlet 20 is fluidly connectable to the HPT exhaust gas outlet 12 and the first duct outlet 22 is fluidly connectable to the LPT exhaust gas inlet.

The second duct 18 comprises a second duct inlet 26 and a second duct outlet 28. The second duct inlet 26 is for gases from a wastegate. In other words, the second duct inlet 26 is fluidly connectable to the wastegate. The wastegate is described in more detail below. The second duct outlet 28 is located within the first duct 16. The second duct 18 comprises an elongate second duct portion 29 which is a length of the second duct located within the first duct 16. The second duct portion 29 comprises the second duct outlet 28. The second duct portion 29 is arranged such that the second duct outlet 28 is pointed towards the first duct outlet 22.

In the depicted example, the axis of the second duct outlet 28 is aligned with a rotor axis (R) of the rotor of the HPT 12. In other words, the axis of the second duct outlet 28 is coaxial with the rotor axis of the rotor of the HPT 12. The second duct outlet 28 is pointed downstream.

In the depicted example, the second duct 18 extends in a direction which is coaxial with the rotor axis R through the rotor hub of the HPT into the first duct. The second duct 18 may be supported within the first duct 16 by supports (not shown). The second duct 18 may therefore be integrally formed with the first duct 16.

The second duct outlet 28 may be arranged within the first duct 16 so it is adjacent the HPT exhaust gas outlet in use. The second duct 18 may be arranged such that the second duct outlet 28 is located a distance in the range of 0.01L to 0.3L along the length of the first duct away from the first duct inlet 20. Preferably, the second duct 18 is arranged such that in use the second duct outlet 28 is located a distance in the range of 0.01L to 0.3L from the HPT exhaust gas outlet. Alternatively, the first duct 16 may have a diameter (D) at the first duct inlet 20, and the second duct 18 may be arranged within the first duct 16 such that the second duct outlet is located a distance in the range of 0.01D to 4D away from the first duct inlet.

Optionally, as shown in Figure 2, the first duct 16 comprises a curved portion 32. The curved portion 32 comprises an inner curved wall 34 and an outer curved wall 36. The ducting 10 further includes a third duct 38 which comprises a third duct inlet 40 and a third duct outlet 42. The third duct inlet 40 is for gases from the wastegate. In other words, the third duct inlet 40 is fluidly connectable to the wastegate. The third duct inlet 40 may be fluidly connected with the second duct 18. The third duct 38 is arranged within the first duct 16 such that the third duct outlet 42 is located adjacent the inner curved wall 34 and pointed downstream.

Rather than the second duct 18 being supported by supports within the first duct 16, the second duct 18 may be supported by the HPT 12. In this arrangement, the HPT 12 comprises a rotor rotatably supported on a rotor hub, and a wastegate duct (second duct) which comprises a wastegate duct inlet connectable to the wastegate and a wastegate duct outlet. The wastegate duct extends through the rotor hub in a direction co-directional with the rotor axis of the rotor.

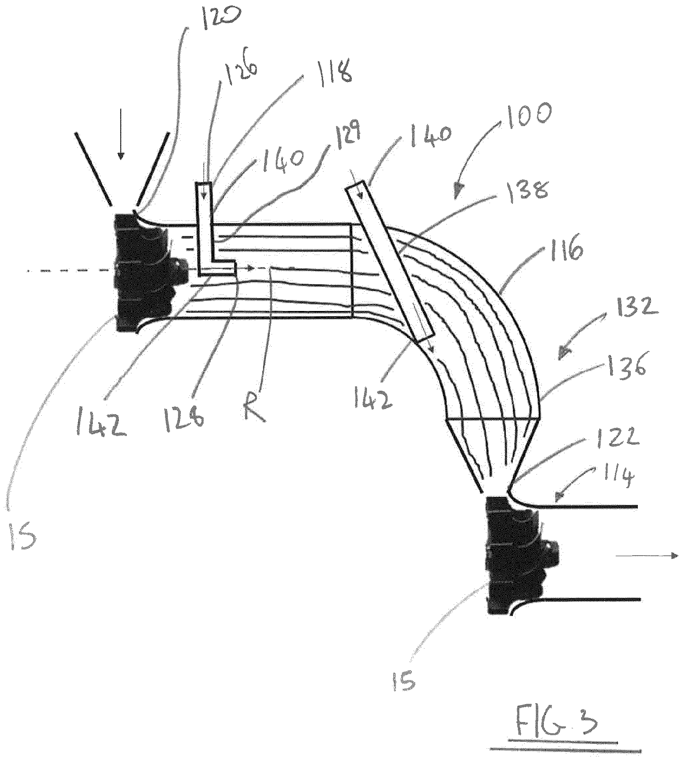

With reference to Figure 3, there is shown ducting 100 according to a second embodiment not forming part of the present invention. Here, the arrangement of the first and third ducts 116, 138 is the same as in the first embodiment. Like the first embodiment, the second duct 118 includes an elongate second duct portion 129 being a length of the second duct located within the first duct 116. The elongate second duct portion 129 comprises the second duct outlet 128, and is arranged such that the second duct outlet 128 is pointed towards the first duct outlet 122. However, in this embodiment, in contrast to the first embodiment, the second duct 118 extends radially into the first duct 116. Specifically, the second duct 118 comprises first and second portions 140, 142. The first portion 140 extends radially into the duct and the second portion 142 extends from the first portion at an angle of approximately 90 degrees to the first portion. The second portion 142 comprises the second duct outlet 128.

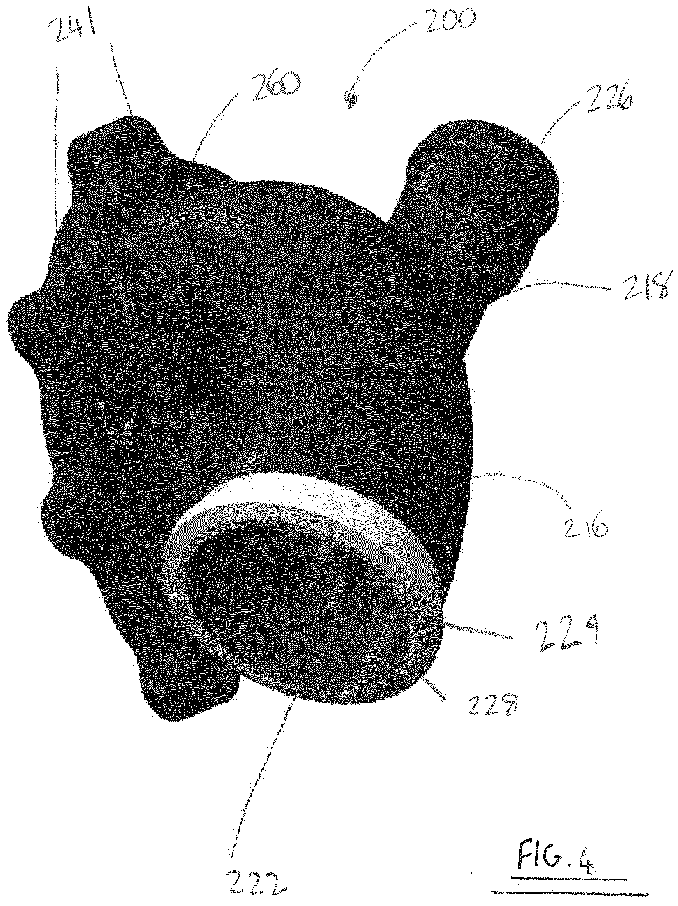

Referring to Figure 4, there is shown ducting 200 according to a third embodiment of the present invention. Here, the ducting 200 comprises a first duct 216 and a second duct 218 like the embodiments above, and like the embodiments above the second duct 218 includes an elongate second duct portion 229 being a length of the second duct located within the first duct 216 and arranged such that the second duct outlet 228 is pointed towards the first duct outlet 222. However, the specific arrangement of the second duct 218 within the first duct 216 is different with respect to the embodiments described above.

Specifically, the second duct 218 is arranged within the first duct 216 such that the second outlet 228 is located adjacent the first duct outlet 222. For example, the first duct 216 may have a length (L) as described with respect to the first embodiment, and the second duct 218 may be arranged within the first duct 216 such that the second duct outlet 228 is located a distance in the range of 0.01L to 0.3L along the length L away from the first duct outlet 222.

In the specific embodiment shown in Figure 4, the second duct 218 is arranged such that the axis of the second duct outlet 228 is coaxial with the axis of the first duct outlet 222. In the embodiment of Figure 4, it will be noted that the diameter of the second duct 218 at the second duct inlet 226 is greater than the diameter of the second duct at the second duct outlet 228. Also, in the embodiment of the ducting 200 of Figure 4 it will be noted that the first duct 216 is integrally formed with an attachment plate 260 which is provided with fixing apertures 241 for receiving fixings for attaching the ducting 200 to the HPT (not shown).

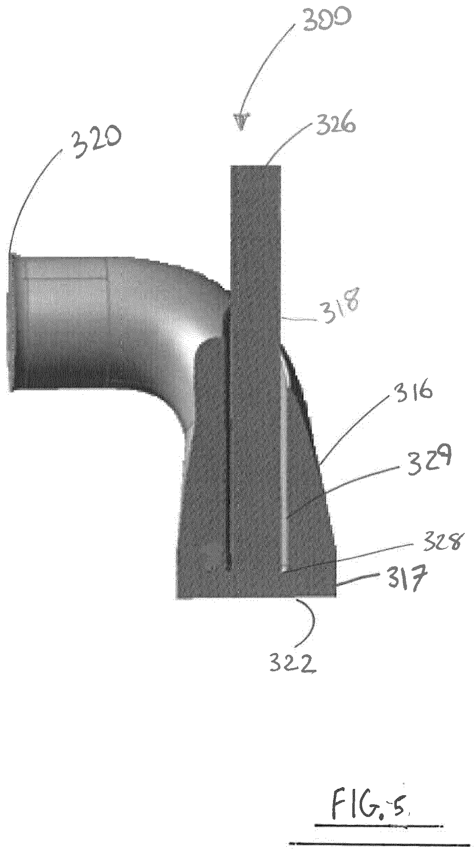

Referring to Figure 5, there is shown a fourth embodiment of ducting 300 according to the present invention. In this embodiment, like the other embodiments described above, the second duct 318 comprises an elongate second duct portion 329 which is a length of the second duct 318 located within the first duct 316. The elongate second duct portion 329 comprises the second duct outlet 328 and is arranged such that the second duct outlet is pointed towards the first duct outlet 322.

The fourth embodiment is similar to the third embodiment in that the second duct 318 is arranged within the first duct 316 such that the second duct outlet 328 is located adjacent the first duct outlet 322. The specific distances for the distance between the second duct outlet 328 and the first duct outlet 322 given in connection with the third embodiment are applicable here.

In the fourth embodiment, the second duct 318 is arranged such that the cross-sectional area of the second duct at the second duct outlet 328 is 0.6 to 1.4 times the cross-sectional area of the second duct at the second duct inlet 226.

It will be noted that in the fourth embodiment the diameter of the first duct 316 at the first duct outlet 322 is greater than the diameter of the first duct at the first duct inlet 320.

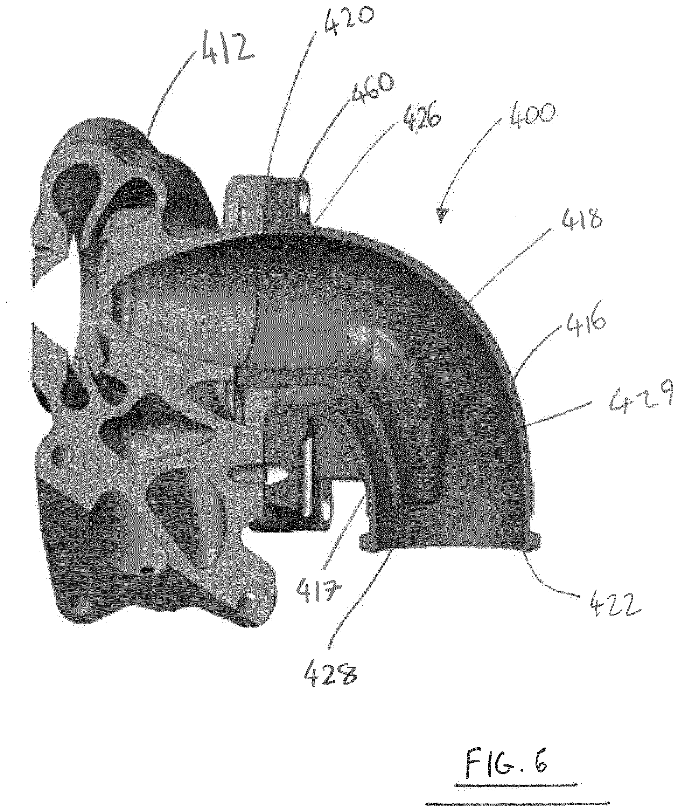

Referring to Figure 6, there is shown a fifth embodiment of ducting 400 according to the present invention. The ducting 400 is shown affixed to a portion of a HPT 412. The ducting 400 includes an attachment plate 460 like the third embodiment to allow the ducting to be fixed to the HPT.

Like all the other embodiments, in the fifth embodiment the second duct 418 comprises an elongate second duct portion 429 which is a length of the second duct 418 located within the first duct 416. The elongate second duct portion 429 comprises the second duct outlet 428 and is arranged such that the second duct outlet 428 is pointed towards the first duct outlet 422. Further, like the third and fourth embodiments, the second duct 418 is arranged within the first duct 416 such that the second duct outlet 428 is located adjacent the first duct outlet 422. The specific distances for the distance between the second duct outlet 428 and the first duct outlet 422 given in connection with the third embodiment are applicable here.

In the fifth embodiment, the second duct 418 is integrally formed with the first duct 416. Further a sidewall 417 of the first duct 416 forms part of the elongate portion 429 of the second duct 418. As shown, the elongate portion 429 extends along the sidewall 417 of the first duct 416. It will be noted that the axis of the second duct outlet 428 is parallel to the axis of the first duct outlet 422.

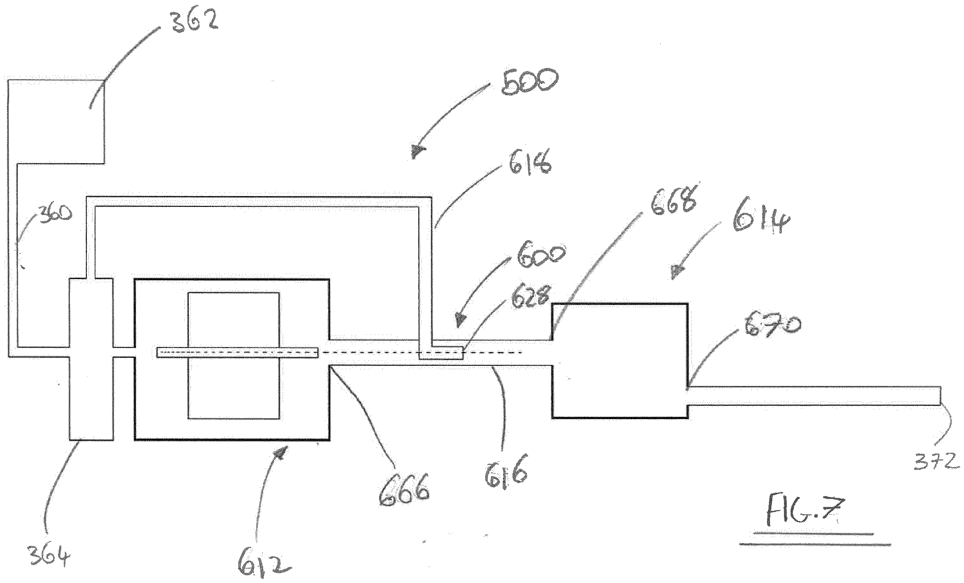

With reference to Figure 7, there is shown a turbocharger system 500 comprising high and low pressure turbochargers 612, 614 and ducting 600 according to the present invention. The HPT and LPT 612, 614 each have compressors like known turbochargers. The ducting 600 of Figure 7 does not have a third duct and curved portion like the ducting shown in Figures 2 and 3. It will be appreciated that the ducting of any of the embodiments according to the present invention may be used. However, in the embodiment shown in Figure 7, it is ducting 600 which has a second duct 618 comprising a second duct outlet 628 with an axis aligned with the rotor axis of the high pressure turbocharger 612 like the first and second embodiments which is used.

As shown, a pipe 360 is arranged to convey exhaust gases from an internal combustion engine 362 to a wastegate 364. The wastegate is arranged to selectively divert at least a portion of the exhaust gases to the inlet of the second duct 618 and/or the HPT 612 which are both fluidly connected with the wastegate 364. The HPT exhaust gas outlet 666 is fluidly connected with the LPT exhaust gas inlet 668 via the first duct 616. A LPT exhaust gas outlet 670 is fluidly connected with a system outlet 372.

Like a known wastegate 364, the wastegate acts to selectively bypass the high pressure turbocharger 612 depending on how much compressed air is required to be supplied to the engine from the turbochargers 612, 614. For example, when the maximum possible amount of compressed air is required from the turbochargers 612, 614 the wastegate does not allow any of the exhaust gases from the engine 362 to bypass the HPT 612 via the second duct, and all the exhaust gases pass through the HPT 612. However, when less than the maximum possible amount of compressed air is required, the wastegate allows at least a portion of the exhaust gases to bypass the HPT 612 via the second duct 618.

### Industrial Applicability

In use of the system of Figure 7, exhaust gases from the engine 362 are conveyed to the wastegate 364. When less than the maximum possible amount of compressed air is required from the HPT and LPT 612, 614, the wastegate 364 permits a first portion of the exhaust gases to enter the HPT 612. The wastegate 364 also permits a second portion of the exhaust gases to enter the second duct 618. The exhaust gases which enter the HPT 612 drive the compressor of the HPT 612. The exhaust gases then exit into the first duct 616 via the HPT exhaust gas outlet. The exhaust gases then meet exhaust gases from the second duct outlet 628 and flow through the first duct to the LPT exhaust gas inlet. The exhaust gases then pass through the LPT 614 to drive the compressor of the LPT. The exhaust gases then flow out of the LPT exhaust gas outlet to the system outlet 372.

In use of a system (not shown) comprising ducting according to the embodiments of Figures 4, 5 and 6, where the second duct outlet of the second duct is located a distance in the range of 0.01L to 0.3L away from the second duct outlet, wastegate gases from the wastegate are injected into the first duct very close to the first duct outlet. This has the effect of increasing the velocity of the fluid flowing through the first duct at the second duct outlet. This in turn leads to an increase in total pressure of the fluid flow at the first duct outlet. This means that there is a lower pressure differential between the fluid flow at the first duct inlet and the first duct outlet.

The velocity of the fluid flow within the first duct at the second duct outlet is further increased by arranging the second duct to have the specific cross-section of the fourth embodiment.

In the present invention, the second duct is formed such that it includes the elongate second duct portion located within the first duct. Doing this optimises the fluid flow within the first duct such that there is less of a pressure differential between fluid flow at the first duct inlet and the first duct outlet. This means that there is a lowering in exhaust manifold pressure, which leads to a reduction in the amount of work required by pistons of the engine, and therefore increased engine efficiency.

In the first and second embodiments not forming part of the present invention, exhaust gases from the wastegate are directed at high loss regions in the flow. Directing the exhaust gases from the wastegate at the regions of high loss in flow lowers exhaust manifold pressure. This has the effect of increasing engine efficiency.

Each of the location of the second duct outlet adjacent the HPT exhaust gas outlet, the location of the third duct outlet adjacent the inner curved wall of the curved portion, arranging the second duct outlet adjacent the first duct outlet, and the specific arrangements of the axis of the second outlet within the first duct described herein, further contributes to lowering exhaust manifold pressure, and increasing engine efficiency.

In the fourth embodiment, the specific cross-section of the second duct at the second duct outlet contributes to lowering exhaust manifold pressure, and increasing engine efficiency.

The advantage of arranging the second duct the way it is arranged in the Figure 3 embodiment is that the ducting achieves most of the performance of the Figure 2 arrangement while being a simplified arrangement.

For the avoidance of any doubt, "towards the first duct outlet" means in a direction generally towards the first duct outlet. In other words, in use, when the first ducting fluidly connects the HPT and LPT the second duct outlet faces downstream. "Towards the first duct outlet" means that the axis of the second duct outlet is not perpendicular to the side wall of the first duct like in the prior arrangement mentioned in the background section of this patent specification.

The "length" of the first duct is the extent of the first duct from the first duct inlet to the first duct outlet. The "length" extends through a mid-point of the first duct from the first duct inlet to the first duct outlet. The first duct inlet and first duct outlet should be interpreted to be openings at opposite ends of the first duct when considering the "length".

As mentioned above, the first duct inlet and first duct outlet should be interpreted to be openings at opposite ends of the first duct. The "diameter" of the first duct at the first duct inlet is therefore the width of the first duct at the opening associated with the end of the first duct comprising the first duct inlet.

For the avoidance of any doubt, each of the ducts may have a cross-section which is any suitable shape. For example, the cross-section of each duct may be circular or square shaped.

For the avoidance of any doubt, a "length of the second duct" means a non-zero length of the second duct. In other words, a non-zero length of the second duct which comprises the second duct outlet is located within the first duct.

For the avoidance of any doubt, all the features relating to the location of the second duct outlet described with reference to the first embodiment are applicable to the second embodiment also.

In all of the embodiments of the ducting, the second duct is arranged within the first duct such that the axis of the second duct outlet is co-directional with a line defining the "length" of the first duct referred to above at the position along the "length" of the first duct where the second duct outlet is located.

In the third, fourth and fifth embodiments of the ducting described above, the second duct is arranged within the first duct such that the axis of the second duct outlet is co-directional with the axis of the first duct outlet.

For the avoidance of any doubt, "co-directional" means parallel or coaxial.

In the turbocharger of the present invention described herein, the turbocharger is arranged such that when it is connected to the first duct a length of the second duct is located within the first duct.

## Claims

1. Ducting (200, 300, 400, 600) for use with:
a high pressure turbocharger (HPT) (412, 612) having:
a HPT exhaust gas outlet,
a rotor (15) with a rotor axis, and
a wastegate adapted to selectively bypass the HPT; and
a low pressure turbocharger (LPT) 2. (614) having an LPT exhaust gas inlet wherein the ducting comprises:
a first duct (216, 316, 416, 616) having a first duct inlet (220, 320, 420) connectable to the HPT exhaust gas outlet and a first duct outlet 2. (222, 322, 422) connectable to the LPT exhaust gas inlet; and
a second duct (218, 318, 418, 618) having a second duct inlet (226, 326, 426) for wastegate gases from the wastegate of the HPT and a second duct outlet (228, 328, 428, 628) located within the first duct wherein the second duct comprises an elongate second duct portion (229, 329, 429) which is a length of the second duct located within the first duct, the second duct portion comprising the second duct outlet and being arranged such that the second duct outlet is pointed towards the first duct outlet, wherein the first duct has a length (L) extending from the first duct inlet to the first duct outlet,
**characterized in that**
the second duct is arranged such that the second duct outlet is positioned along the length (L) at a distance in the range of 0.01L to 0.3L away from the first duct outlet

2. Ducting according to claim 1, wherein the second duct is arranged such that the axis of the second duct outlet is co-axial with the axis of the first duct outlet.

3. Ducting according to claim 1, wherein the second duct is arranged such that the axis of the second duct outlet is parallel with the axis of the first duct outlet.

4. Ducting according to any of claims 1 to 3, wherein the second duct is integrally formed with the first duct.

5. Ducting according to any of claims 1 to 4, wherein a cross sectional area of the second duct at the second duct outlet is 0.6 to 1.4 times a cross sectional area of the second duct at the second duct inlet.

6. A turbocharger system comprising:
a high pressure turbocharger (HPT) having:
a HPT exhaust gas inlet and a HPT exhaust gas outlet,
a rotor with a rotor axis, and
a wastegate adapted to selectively bypass the HPT;
a low pressure turbocharger (LPT) having a LPT exhaust gas inlet and a LPT exhaust gas outlet; and
ducting according to any preceding claim,
wherein the first duct inlet of the ducting is connected with the HPT exhaust gas outlet and the first duct outlet of the ducting is connected with the LPT exhaust gas inlet,
wherein the second duct inlet of the ducting is fluidly connected with the wastegate.

7. A vehicle including:
an internal combustion engine; and
the turbocharger system of claim 6.

## Patentansprüche

1. Eine Rohrleitung (200, 300, 400, 600) zur Verwendung mit Folgendem:
einem Hochdruckturbolader (HPT, High Pressure Turbocharger) (412, 612), der Folgendes aufweist:
einen HPT-Abgasauslass,
einen Rotor (15) mit einer Rotorachse, und
ein Ladedruckregelventil, das angepasst ist, um den HPT selektiv zu umgehen; und
einen Niederdruckturbolader (LPT, Low Pressure Turbocharger) (614), der einen LPT-Abgaseinlass aufweist,
wobei die Rohrleitung folgendes beinhaltet:
ein erstes Rohr (216, 316, 416, 616), das Folgendes aufweist: einen ersten Rohreinlass (220, 320, 420), der mit dem HPT-Abgasauslass verbindbar ist, und einen ersten Rohrauslass (222, 322, 422), der mit dem LPT-Abgaseinlass verbindbar ist; und
ein zweites Rohr (218, 318, 418, 618), das Folgendes aufweist: einen zweiten Rohreinlass (226, 326, 426) für Ladedruckregelventil-Gase aus dem Ladedruckregelventil des HPT und einen zweiten Rohrauslass (228, 328, 428, 628), der sich innerhalb des ersten Rohrs befindet,
wobei das zweite Rohr einen langgestreckten zweiten Rohrabschnitt (229, 329, 429) beinhaltet, der ein Längsstück des zweiten Rohrs ist, das sich innerhalb des ersten Rohrs befindet, wobei der zweite Rohrabschnitt den zweiten Rohrauslass beinhaltet und derart angeordnet ist, dass der zweite Rohrauslass auf den ersten Rohrauslass gerichtet ist, wobei das erste Rohr eine Länge (L) aufweist, die sich von dem ersten Rohreinlass zu dem ersten Rohrauslass erstreckt,
**dadurch gekennzeichnet, dass**
das zweite Rohr derart angeordnet ist, dass der zweite Rohrauslass entlang der Länge (L) in einem Abstand im Bereich von 0,01 L bis 0,3 L von dem ersten Rohrauslass entfernt positioniert ist.

2. Rohrleitung gemäß Anspruch 1, wobei das zweite Rohr derart angeordnet ist, dass die Achse des zweiten Rohrauslasses koaxial mit der Achse des ersten Rohrauslasses ist.

3. Rohrleitung gemäß Anspruch 1, wobei das zweite Rohr derart angeordnet ist, dass die Achse des zweiten Rohrauslasses parallel zu der Achse des ersten Rohrauslasses ist.

4. Rohrleitung gemäß einem der Ansprüche 1 bis 3, wobei das zweite Rohr mit dem ersten Rohr einstückig gebildet ist.

5. Rohrleitung gemäß einem der Ansprüche 1 bis 4, wobei eine Querschnittsfläche des zweiten Rohrs an dem zweiten Rohrauslass das 0,6- bis 1,4-fache einer Querschnittsfläche des zweiten Rohrs an dem zweiten Rohreinlass beträgt.

6. Ein Turboladersystem, das Folgendes beinhaltet:
einen Hochdruckturbolader (HPT), der Folgendes aufweist:
einen HPT-Abgaseinlass und einen HPT-Abgasauslass,
ein Rotor mit einer Rotorachse, und
ein Ladedruckregelventil, das angepasst ist, um den HPT selektiv zu umgehen;
einen Niederdruckturbolader (LPT), der einen LPT-Abgaseinlass und einen LPT-Abgasauslass aufweist; und
eine Rohrleitung gemäß einem der vorhergehenden Ansprüche,
wobei der erste Rohreinlass der Rohrleitung mit dem HPT-Abgasauslass verbunden ist und der erste Rohrauslass der Rohrleitung mit dem LPT-Abgaseinlass verbunden ist,
wobei der zweite Rohreinlass der Rohrleitung mit dem Ladedruckregelventil fluidisch verbunden ist.

7. Ein Fahrzeug, das Folgendes umfasst:
einen Verbrennungsmotor; und
das Turboladersystem gemäß Anspruch 6.

## Revendications

1. Ensemble de conduits (200, 300, 400, 600) pour une utilisation avec :
un turbocompresseur à haute pression (HPT) (412, 612) ayant :
une sortie de gaz d'échappement de HPT,
un rotor (15) avec un axe de rotor, et
une soupape de décharge conçue pour contourner sélectivement le HPT ; et
un turbocompresseur à basse pression (LPT) (614) ayant une entrée de gaz d'échappement de LPT
où l'ensemble de conduits comprend :
un premier conduit (216, 316, 416, 616) ayant une entrée de premier conduit (220, 320, 420) pouvant être raccordée à la sortie de gaz d'échappement de HPT et une sortie de premier conduit (222, 322, 422) pouvant être raccordée à l'entrée de gaz d'échappement de LPT ; et
un deuxième conduit (218, 318, 418, 618) ayant une entrée de deuxième conduit (226, 326, 426) pour des gaz de soupape de décharge provenant de la soupape de décharge du HPT et une sortie de deuxième conduit (228, 328, 428, 628) située au sein du premier conduit
où le deuxième conduit comprend une portion de deuxième conduit allongée (229, 329, 429) qui est une longueur du deuxième conduit située au sein du premier conduit, la portion de deuxième conduit comprenant la sortie de deuxième conduit et étant agencée de telle sorte que la sortie de deuxième conduit est amenée à être tournée vers la sortie de premier conduit, où le premier conduit a une longueur (L) s'étendant de l'entrée de premier conduit à la sortie de premier conduit,
**caractérisée en ce que**
le deuxième conduit est agencé de telle sorte que la sortie de deuxième conduit est positionnée le long de la longueur (L) éloignée d'une distance comprise dans l'intervalle de 0,01 L à 0,3 L de la sortie de premier conduit.

2. Ensemble de conduits selon la revendication 1, où le deuxième conduit est agencé de telle sorte que l'axe de la sortie de deuxième conduit est coaxial avec l'axe de la sortie de premier conduit.

3. Ensemble de conduits selon la revendication 1, où le deuxième conduit est agencé de telle sorte que l'axe de la sortie de deuxième conduit est parallèle à l'axe de la sortie de premier conduit.

4. Ensemble de conduits selon n'importe lesquelles des revendications 1 à 3, où le deuxième conduit est formé de façon solidaire avec le premier conduit.

5. Ensemble de conduits selon n'importe lesquelles des revendications 1 à 4, où une aire de section transversale du deuxième conduit au niveau de la sortie de deuxième conduit fait 0,6 à 1,4 fois une aire de section transversale du deuxième conduit au niveau de l'entrée de deuxième conduit.

6. Un système de turbocompresseur comprenant :
un turbocompresseur à haute pression (HPT) ayant :
une entrée de gaz d'échappement de HPT et une sortie de gaz d'échappement de HPT,
un rotor avec un axe de rotor, et
une soupape de décharge conçue pour contourner sélectivement le HPT ;
un turbocompresseur à basse pression (LPT) ayant une entrée de gaz d'échappement de LPT et une sortie de gaz d'échappement de LPT ; et
un ensemble de conduits selon n'importe quelle revendication précédente,
où l'entrée de premier conduit de l'ensemble de conduits est raccordée à la sortie de gaz d'échappement de HPT et la sortie de premier conduit de l'ensemble de conduits est raccordée à l'entrée de gaz d'échappement de LPT,
où l'entrée de deuxième conduit de l'ensemble de conduits est raccordée fluidiquement à la soupape de décharge.

7. Un véhicule incluant :
un moteur à combustion interne ; et
le système de turbocompresseur de la revendication 6.
